## (19) Europäisches Patentamt
### European Patent Office
### Office européen des brevets

(11) **EP 1 232 297 B1**

(12) **EUROPEAN PATENT SPECIFICATION**

(45) Date of publication and mention
of the grant of the patent:
**23.07.2003 Bulletin 2003/30**

(51) Int Cl.⁷: **C25B 1/30**, C01B 11/02

(21) Application number: **00978158.4**

(22) Date of filing: **01.11.2000**

(86) International application number:
**PCT/SE00/02141**

(87) International publication number:
**WO 01/038607 (31.05.2001 Gazette 2001/22)**

(54) **PROCESS FOR PRODUCTION OF AN ALKALINE HYDROGEN PEROXIDE SOLUTION AND CHLORINE DIOXIDE**

VERFAHREN ZUR HERSTELLUNG EINER ALKALISCHEN WASSERSTOFFPEROXIDLÖSUNG UND CHLORDIOXID

PROCEDE DE PRODUCTION D'UNE SOLUTION ALCALINE D'EAU OXYGENEE ET DE DIOXYDE DE CHLORE

(84) Designated Contracting States:
**AT BE CH CY DE DK ES FI FR GB GR IE IT LI LU MC NL PT SE TR**

(30) Priority: **26.11.1999 US 450128**
**01.12.1999 EP 99850188**

(43) Date of publication of application:
**21.08.2002 Bulletin 2002/34**

(73) Proprietors:
• **AKZO NOBEL N.V.**
**6800 SB Arnhem (NL)**
• **Eka Chemicals AB**
**445 80 Bohus (SE)**
Designated Contracting States:
**SE**

(72) Inventors:
• **HAMMER-OLSEN, Roy**
**S-840 10 Ljungaverk (SE)**
• **SOKOL, John, C.**
**Kennesaw, GA (US)**
• **SUNDSTRÖM, Göran**
**S-862 33 Kvissleby (SE)**
• **SUNDQVIST, Johan**
**S-821 50 Bollnäs (SE)**

(74) Representative: **Jönsson, Christer et al**
**Eka Chemicals AB,**
**Patent Department,**
**Box 11556**
**100 61 Stockholm (SE)**

(56) References cited:
**EP-A- 0 612 685**       **US-A- 3 884 777**
**US-A- 5 074 975**       **US-A- 5 702 585**

EP 1 232 297 B1

**Description**

Field of the invention

The present invention relates to a process for producing hydrogen peroxide in an electrochemical cell by cathodic reduction of oxygen. The invention further relates to production of chlorine dioxide.

Background of the invention

Alkaline solutions of hydrogen peroxide are commonly used for bleaching and/or delignification of cellulose pulp. The hydrogen peroxide is normally produced according to the anthraquinone process in large plants and transported to the pulp mills. The anthraquinone process is very effective, but requires high investments and is not suitable for small scale on-site production.
Electrochemical production of alkaline hydrogen peroxide solutions is disclosed in US Patent 5702585, "Process for the production of mixtures of caustic soda and hydrogen peroxide via the reduction of oxygen", P. C. Foller et al, Journal of Applied Electrochemistry, 25 (1995), p. 613-627 and in C. Oloman, "Electrochemical Processing for the Pulp and Paper Industry", The Electrochemical Consultancy 1996 p. 143-152. However, none of the documents disclose a process that is flexible to obtain various ratios $NaOH^-:H_2O_2$ in combination with production of one or more other chemicals that can be used at pulp mills.
Also chlorine dioxide is a commonly used bleaching agent at pulp mills. Due to the chemical instability of chlorine dioxide it is always produced on-site and many different processes are used commercially, such as those described in US 5770171, US 5091166, US 5091167 and EP 612686. Most of the commercial processes involve reaction of sodium chlorate with a mineral acid, normally sulfuric acid, and a reducing agent, such as chloride ions, sulfur dioxide, methanol or hydrogen peroxide, in an acidic reaction medium. Sodium sulphate is normally obtained as a by-product, either as an acid or neutral solid salt cake or in the form of an acidic residual solution. In many modem pulp mills the sulphate by-product is considered as a useless waste material that has to be disposed, although there still is a demand for some of the sulphate for make up of the cooking liquor.
The formation of sulphate by-product can be decreased or completely avoided by replacing part of or all the sodium chlorate with chloric acid, as described in WO 93/25470. It is also possible to electrochemically acidify the solid sodium sulphate obtained, as described in US 5198080, or to electrochemically acidify depleted reaction medium, without crystallisation, as described in US 5487881. However, none of these methods have so far been commercialised.

Summary of the invention

It is an object of the invention to provide an electrochemical process for producing alkaline hydrogen peroxide solutions that can be used in a great variety of bleaching processes, such as bleaching and/or delignification of cellulose pulp, particularly in ECF (elemental chlorine free) or TCF (totally chlorine free) sequences, or for brightening of mechanical pulp.
It is another object of the invention to provide an electrochemical process for producing alkaline hydrogen peroxide solutions, in which one or more other chemicals are obtained that can be used at a pulp mill, particularly an acidified chlorate containing solution for use in the production of chlorine dioxide.
It is still another object of the invention to provide an electrochemical process for producing alkaline hydrogen peroxide solutions, in which one or more by-products from chlorine dioxide production can be used as feed materials.
It is still another object to provide a method for production of hydrogen peroxide and chlorine dioxide that awards for flexibility as to the amount of sulphate by-product obtained.
These objects are achieved by the process defined in the appended claims.

General description of the invention

According to one aspect, the invention concerns a continuous process for production of an alkaline hydrogen peroxide solution and an acidified alkali metal salt solution in an electrochemical cell including an anode compartment provided with an anode and a cathode compartment provided with an oxygen reducing cathode. The process comprises the steps of:

(a) feeding an aqueous alkali metal salt solution containing chlorate to the anode compartment;
(b) reacting at the anode said aqueous alkali metal salt solution to obtain $H^+$ and to form an acidified aqueous alkali metal salt solution in the anode compartment;
(c) transferring $H^+$ and alkali metal ions from the anode compartment to the cathode compartment;

(d) feeding oxygen or oxygen containing fluid and water to the cathode compartment;

(e) reacting at the cathode said oxygen and water to form an alkaline aqueous solution containing hydrogen peroxide ($H_2O_2$) and alkali metal hydroxide (MOH) in the cathode compartment;

(f) withdrawing acidified aqueous alkali metal salt solution formed in the anode compartment; and,

(g) withdrawing alkaline aqueous hydrogen peroxide solution formed in the cathode compartment,

wherein the molar ratio MOH:$H_2O_2$ for the net production of alkali metal hydroxide and hydrogen peroxide in the cathode compartment in step (e) is maintained from about 0.1:1 to about 2:1, suitably from about 0.1:1 to about 1.8:1, preferably from about 0.1:1 to about 1.7:1, most preferably from about 0.5:1 to about 1.7:1. M refers to alkali metals such as sodium, potassium or mixtures thereof, among which sodium is most preferred.

The terms anode compartment and cathode compartment as used herein also include optional recirculation loops for anolyte and catholyte. The anode- and cathode compartments are suitably separated by at least one barrier, such as a membrane or a diaphragm, permeable for $H^+$ and alkali metal ions, but preferably not for anions such as hydroxide- and perhydroxyl ions. The barrier is preferably at least one ion-exchange membrane, most preferably at least one cation-exchange membrane. Standard polymeric ion-exchange membranes are preferred, but also high ion conducting membranes such as ceramic membranes can be useful. In most cases a two compartment cell is used, but also cells comprising one of more compartments between the anode- and cathode compartments may come into consideration.

Any oxygen reducing cathode can be used, although it is preferably made of carbon, such as graphite or carbon black, optionally with other materials incorporated, like inert chemically resistant polymers (e.g. PTFE) or catalytically active materials (e.g. gold, zinc or the like), the latter suitably being employed as a partial coating on the carbon. Due to the low solubility of oxygen in the catholyte a three dimensional electrode is preferred as a cathode. One group of three dimensional electrodes include fixed beds with large porosity, for example reticulate (e.g. Reticulated Vitreous Carbon), particulate or felt (e.g. graphite felt) beds, or beds of non-woven fibres (e.g. carbon fibres), which all are commercially available. These kinds of fixed beds may be designed as a trickle-bed cathode. Another group of three dimensional electrodes are micro-porous, optionally layered, gas diffusion electrodes, which may, for example, be made of porous carbon. Such gas diffusion electrode are commercially available and are similar to those used in, e.g. fuel cells.

For the anode, any standard type of electrodes can be used, such as titanium coated with precious metal oxides, e.g. DSA $O_2$™, or gas electrodes like polarised hydrogen anodes.

The aqueous solution fed to the anode compartment in step (a) is an optionally acidic solution containing alkali metal chlorate, optionally also containing alkali metal sulphate and/or other alkali metal salts. The solution suitably contains from about 0.5 moles/ up to saturation, preferably from about 1 to about 12 moles/l of alkali metal salts. The acidity is preferably from about 0 to about 11 N, most preferably from about 0 to about 9 N. In one preferred embodiment the solution originates directly or indirectly from a chlorine dioxide generator. For example, the alkali metal solution may be depleted acidic reaction medium from a chlorine dioxide generator, optionally further acidified by electrochemical methods, or neutral or acid alkali metal sulphate obtained as a by-product in production of chlorine dioxide. In another preferred embodiment, a solution of preferably substantially neutral alkali metal chlorate is fed to the anode compartment.

At the anode the water in the solution is reacted in step (b) to yield $H^+$ and normally also oxygen. The following reaction is believed to take place:

$$H_2O \rightarrow 2H^+ + \tfrac{1}{2}O_2 + 2\,e^-$$

The voltage over the cell brings cations in step (c) to migrate towards the cathode. Thus both alkali metal ions and $H^+$ are transferred from the anode compartment into the cathode compartment. However, the entire amount of $H^+$ produced are not transferred, thus leaving an acidified alkali metal salt product solution containing chlorate in the anode compartment, preferably also containing sulphate.

Oxygen may be fed to the cathode compartment in step (d) together with a feed of catholyte, suitably at a sufficiently high pressure to at least partly dissolve it in the catholyte, for example from about 100 to about 2000 kPa. A high pressure improves the current density, but also the cost of the cell due to more complicated construction. If a gas diffusion electrode is used as a cathode, the oxygen is preferably fed as a gas, most preferably together with water vapour, to a gas chamber from which it diffuses into the cathode. Some of the oxygen may be derived from the oxygen obtained at the anode in step (b). It is also possible to use oxygen obtained at production of chlorine dioxide with hydrogen peroxide as a reducing agent.

In step (e) water and oxygen are reacted at the cathode to yield perhydroxyl- and hydroxide ions. The following reaction is believed to take place.

$$H_2O + O_2 + 2e^- \rightarrow HO_2^- + OH^-$$

Together with the H$^+$ and the alkali metal ions transferred from the anode compartment, the reaction products will form an aqueous product solution in the cathode compartment containing hydrogen peroxide and alkali metal hydroxide, suitably with a concentration from about 1 to about, 15 wt%, preferably from about 2 to about 10 wt% of hydrogen peroxide and suitably from about 2 to about 20 wt%, preferably from about 4 to about 15 wt% of alkali metal hydroxide. The molar ratio MOH:H$_2$O$_2$ obtained in the net production of alkali metal hydroxide and hydrogen peroxide depends on the ratio of alkali metal ions to H$^+$ transferred from the anode compartment, which is determined by the corresponding ratio in the anode compartment. By setting the acidity of the alkali metal salt solution obtained in the anode compartment the molar ratio MOH:H$_2$O$_2$ can thus be controlled. Further, by setting the residence time in the anode compartment the conversion degree and the acidity of the resulting alkali metal solution can be controlled, and thereby also the molar ratio MOH:H$_2$O$_2$ produced in the cathode compartment. A low molar ratio, i.e. high amounts of hydrogen peroxide makes the solution suitable for a variety of bleaching processes, such as ECF and TCF sequences or brightening of mechanical pulp. On the other hand, this requires a low molar ratio of alkali metal ions to H$^+$ transferred to the cathode compartment, which lowers the current efficiency. It is preferred to operate with a conversion degree of alkali metal ions to H$^+$ in the anode compartment from about 0.05 to about 90%, most preferably from about 0.1 to about 80%, somewhat depending on which alkali metal salts being used. For a sodium chlorate solution the conversion degree is suitably from about 2 to about 80%, preferably from about 7 to about 60%, most preferably from about 7 to about 40%. The current efficiency for the production of alkali metal hydroxide (corresponds to the current efficiency for alkali metal ions transferred from the anode- to the cathode compartment) is preferably from about 3 to about 85% most preferably from 20 to almost 70%.

In steps (f) and (g) the product solutions obtained in the anode- and cathode compartments are simply withdrawn. The acidified alkali metal solution obtained in the anode compartment can then be used as a feed for chlorine dioxide production, while the alkaline hydrogen peroxide solution obtained in the cathode compartment may be used for bleaching and/or delignifying cellulose pulp.

In many cases it can be favourable to connect two or more cells as described above in series. It is then possible to cascade only the anolyte (from step (f) in the first cell to step (a) in the next one), only the catholyte (from step (g) in the first cell to step (d) in the next one), or both the anolyte and the catholyte.

The alkali metal referred to herein is suitably sodium, potassium or mixtures thereof, preferably sodium.

A preferred embodiment of the invention concerns a continuous process for production of hydrogen peroxide and simultaneous production of chlorine dioxide by reduction of chlorate ions in an acidic reaction medium maintained in a reactor comprising the steps:

(i) producing an alkaline hydrogen peroxide solution and an acidified alkali metal salt solution by performing steps (a) through (g) as described above;
(ii) feeding to the reaction medium in the reactor acidified aqueous alkali metal salt solution withdrawn from anode compartment in step (f) above;
(iii) reducing chlorate ions in the reaction medium to yield chlorine dioxide, preferably by means of a reducing agent, most preferably hydrogen peroxide; and,
(iv) withdrawing chlorine dioxide from the reactor.

In this embodiment the alkali metal salt solution in step (a) suitably has a concentration from about 0.5 moles/l up to saturation, preferably from about 2 to about 12 moles/l, most preferably from about 3 to about 8 moles/l. If the solution is alkali metal chlorate the acidity preferably is from about 0 to about 5 N, most preferably from about 0 to about 4 N. If the solution is a mixture of sulphate and chlorate, the acidity is suitably from about 0 to about 11 N, preferably from about 0.5 to about 9 N.

It is particularly preferred to feed a substantially neutral alkali metal chlorate solution to the anode compartment in step (a), thereby obtaining a mixture of chloric acid and alkali metal chlorate that is withdrawn in step (f) and fed in step (ii).

The chlorine dioxide can be produced in step (iii) and (iv) according to any known process in which chlorate ions are reduced, by a reducing agent or electrochemically, including those described in the earlier mentioned US 5770171, US 5091166, US 5091167 and WO 93/25470. These preferred processes involve feeding to an acidic reaction medium sulfuric acid, a reducing agent, preferably methanol, hydrogen peroxide or mixtures thereof, and alkali metal chlorate and/or chloric acid. In the reaction medium, preferably maintained at subatmospheric pressure, chlorate ions are reduced to chlorine dioxide, which is withdrawn as a gas, while alkali metal sulphate is formed as a by-product, normally as a solid acidic or neutral salt cake. It is also possible to produce chlorine dioxide in a substantially atmospheric process, as described in EP 612686, or by using other reducing agents, alone or in mixtures, such as chloride ions, sulfur dioxide or organic substances like ethanol, isopropanol, other alcohols and formaldehyde. The acidity of the acidified alkali metal salt solution fed in step (ii) determines the amount of sulfuric acid that has to be fed, and thereby also the amount of sulphate by-product formed. Thus, it is possible to adapt the process to produce the amount of sulphate by-product that is needed at each specific pulp mill.

The net amount of sulphate by-product from the chlorine dioxide generation can also be reduced by using a solution thereof as a feed to the anode compartment in step (a), in combination with alkali metal chlorate. The acidified alkali metal salt solution withdrawn in step (g) and fed in step (ii) will then be a mixture containing alkali metal sulphate, sulfuric acid, alkali metal chlorate and chloric acid. The amount of sulfuric acid added from external sources will then be reduced to an extent depending on the conversion degree in the anode compartment in step (b). Thus, also in this case it is possible to control the net production of sulphate by-product and adapt it to the demand in each specific pulp mill.

In a variation of this embodiment depleted reaction medium from the chlorine dioxide generation in step (iii) is withdrawn from the reactor, preferably substantially without crystallisation of alkali metal salts, and used as a feed to the anode compartment in step (a). This aqueous solution will then suitably contain alkali metal sulphate, alkali metal chlorate and suitably have an acidity from about 0.5 to about 11 N, preferably from about 3 to about 9 N, most preferably from about 3 to about 8. The sulphate concentration is suitably from about 0.5 moles/l up to saturation, preferably from about 1 to about 8 moles/l, most preferably from about 1 to about 6 moles/l, while the chlorate concentration suitably is from about 0.5 moles/l up to saturation, preferably from about 1 to about 5 moles/l, most preferably from about 1 to about 4 moles/l. Preferably the molar ratio $H^+:SO_4^{2-}$ is from about 0.5 to about 1.5, most preferably from about 0.7 to about 1.3. The conversion degree for alkali metal ions to $H^+$ in the anode compartment is preferably from about 0.05 to about 20%, most preferably from about 0.1 to about 10%. The acidified alkali metal solution is then used as a feed in step (ii). It is possible to substantially avoid net production of sulphate by-product. The entire process can be run in the same manner as the process described in the earlier mentioned US 5487881, with the exception that the electrochemical acidification step is performed as described above and thus also involves simultaneous production of an alkaline hydrogen peroxide solution.

In still another variation of this embodiment depleted reaction medium from step (iii) is withdrawn from the chlorine dioxide reactor in the same manner and with the same preferred composition as described above. The withdrawn reaction medium is first electrochemically acidified in a cell also producing alkali metal hydroxide, whereupon the acidified reaction medium is further acidified in an electrochemical cell according to step (i), and finally used as a feed in step (ii). Also this variation of the process can be run as described in US 5487881, with the exception that the acidification of the depleted reaction medium is carried out in at least two steps, a first step involving co-production of alkali metal hydroxide, and a second step involving co-production of an alkaline hydrogen peroxide solution. The variation can also be described as a continuous process for production of hydrogen peroxide and simultaneous production of chlorine dioxide by reduction of chlorate ions in an acidic reaction medium maintained in a reactor comprising the steps:

(i) producing an alkaline hydrogen peroxide solution and an acidified alkali metal salt solution by performing steps (a) through (g) as described above;
(ii) feeding to the reaction medium in the reactor acidified aqueous alkali metal salt solution withdrawn from anode compartment in step (f) of step (i);
(iii) reducing chlorate ions in the reaction medium to yield chlorine dioxide;
(iv) withdrawing chlorine dioxide from the reactor;
(v) withdrawing depleted reaction medium from the reactor;
(vi) acidifying depleted reaction medium from step (v) in an electrochemical cell under simultaneous production of alkali metal hydroxide; and,
(vii) using acidified reaction medium from step (vi) as a feed in step (a) of step (i).

By varying the alkali metal hydroxide production between steps (i) and (vi), the production of pure alkali metal hydroxide and the ratio of alkali metal hydroxide to hydrogen peroxide can be adjusted to meet the specific demand at each individual pulp mill. Also hear it is possible to substantially avoid net production of sulphate by-product.

Brief description of the drawings

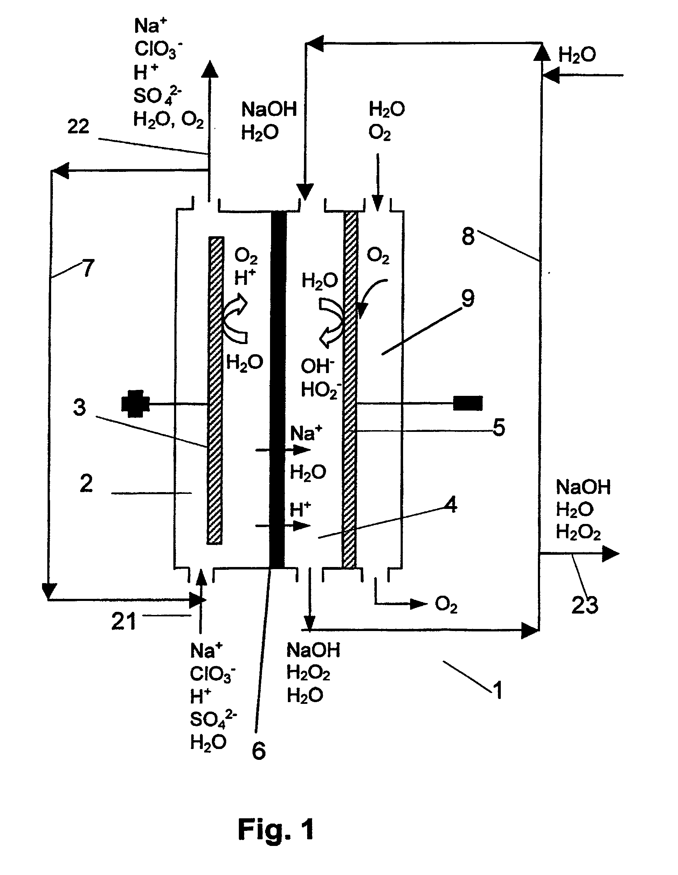

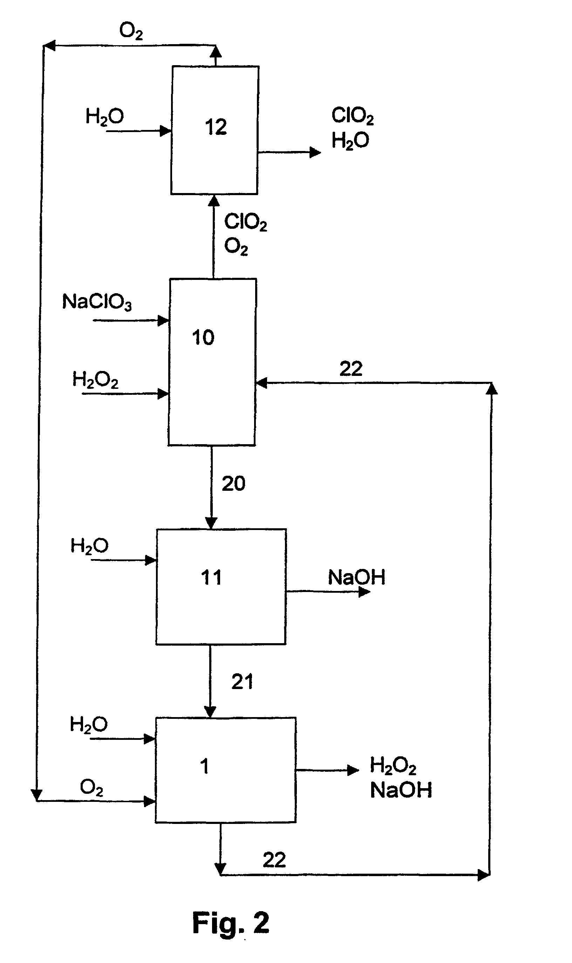

Fig. 1 schematically shows an electrochemical cell for production of acidified alkali metal salt solution and alkaline hydrogen peroxide solution. Fig. 2 schematically shows a flow sheet for a process of producing chlorine dioxide, alkali metal hydroxide and alkaline hydrogen peroxide solution.

Detailed description of preferred embodiments

Some preferred embodiments will now be described in detail with reference to the drawings.

Fig. 1 shows a two compartment cell 1 with an anode compartment 2 including a recirculation loop 7 and provided with a DSA™ anode 3, and a cathode compartment 4 including a recirculation loop 8 and provided with an oxygen reducing gas diffusion cathode 5. The compartments 2, 4 are separated by a cation-exchange membrane 6. Adjacent the gas diffusion cathode 5 is a gas chamber 9. If another kind of three dimensional cathode is used, the gas chamber 9 is normally excluded.

In operation, an acidic aqueous solution 21 of sodium sulphate and sodium chlorate, thus containing $Na^+$, $H^+$, $ClO_3^-$, $SO_4^{2-}$ and $H_2O$, is continuously fed to the anode compartment 2. This solution 21 may, for example, be depleted reaction medium from a chlorine dioxide reactor. At the anode 3 $H_2O$ is split to $O_2$ and $H^+$, thus further increasing the acidity of the solution. The voltage over the cell brings some of the $Na^+$ and $H^+$ to migrate from the anode compartment 2, through the membrane 6, into the cathode compartment 4. As a result, the aqueous solution formed in the anode compartment 2 and circulating through the loop 7, i.e. the anolyte, will contain the same components as the feed solution, but with higher content of $H^+$ and lower content of $Na^+$. Part of this solution is withdrawn as a product 22 together with oxygen.

Simultaneously, humid oxygen, i.e. $O_2$ and $H_2O$ in gas form, are continuously fed to the cathode compartment 4, while a catholyte containing NaOH, $H_2O_2$ and $H_2O$ are circulating in the loop 8. The gaseous components diffuse into the cathode 5 and react to form $OH^-$ and $HO_2^-$, which combine with the $Na^+$ and $H^+$ transferred from the anode compartment 2 through the membrane 6 and form hydrogen peroxide and sodium hydroxide. Part of the catholyte is withdrawn as a product 23, while make up water is fed to the loop 8.

Operation of a cell with another kind of three dimensional cathode than gas diffusion electrode is performed in a similar way, although the oxygen is not fed to a gas chamber, but to the catholyte in which it at least partially is dissolved. The pressure in the cathode compartment is then preferably from about 100 to about 2000 kPa, while it is preferred to have a slightly higher pressure in the anode compartment as this improves the safety if there would be a leakage over the membrane, and possibly also the current efficiency.

In one mode of operation, the sodium salt solution in the anode compartment 2 has the following composition: 4.2 moles/l of sulphate, 3.5 moles/l of chlorate and an acidity of 5.2 N. Using a gas diffusion cathode 5, without a catalyst, and made of a low to medium surface area carbon, feeding humid oxygen in excess, operating at a current density of about 500 $A/m^2$ and keeping the catholyte concentration constant at an alkalinity of 6 wt% NaOH, the net production in the cathode compartment 4 will be a product 23 having a $NaOH:H_2O_2$ molar ratio of about 1.6 and a sodium hydroxide concentration of 6 wt%. The conversion degree from $Na^+$ to $H^+$ will be 1.6 % at a supplied current of 270 A min per litre anolyte, while the current efficiency for sodium hydroxide formation will be about 65%.

In another mode of operation, acidifying a neutral sodium chlorate solution substantially free from sulphate, the solution in the anode compartment 2 contains 5 moles/l of chlorate and has an acidity of 0.5 N. Using a gas diffusion cathode 5, without a catalyst, and made of a low to medium surface area carbon, feeding humid oxygen in excess, operating at a current density of about 500 $A/m^2$ and keeping the catholyte concentration constant at an alkalinity of 6 wt% NaOH, the net production in the cathode compartment 4 will be a product 23 having a $NaOH:H_2O_2$ molar ratio of 1.4 and a sodium hydroxide concentration of 6 wt%. The conversion degree from $Na^+$ to $H^+$ will be 10%, while the current efficiency for sodium hydroxide formation will be 60%.

Fig. 2 shows a variation of a process for simultaneous production of chlorine dioxide, hydrogen peroxide and sodium hydroxide. A chlorine dioxide reactor 10, operating as described in the earlier mentioned US 5487881 and holding an aqueous acidic reaction medium containing $Na^+$, $H^+$, $ClO_3^-$ and $SO_4^{2-}$, is continuously fed with $NaClO_3$, $H_2O_2$ and an acidic aqueous solution 22 containing $Na^+$, $H^+$, $ClO_3^-$ and $SO_4^{2-}$. In the reactor 10 $ClO_3^-$ is reacted with $H_2O_2$ and $H^+$ to form $ClO_2$ and $O_2$, which are withdrawn as gases. Depleted reaction medium 20, with substantially the same composition as within the reactor 10, is withdrawn without crystallisation and fed to an electrochemical cell 11, also operating as described in US 5487881 and thus producing an acidified solution 21 containing the same components as the feed solution 20, but with higher content of $H^+$ and lower content of $Na^+$. Simultaneously, sodium hydroxide is produced in the cell 11 from water and the sodium ions removed from the feed solution 20. The amount of sodium hydroxide produced increases with the conversion degree for the acidification. In a preferred mode of operation the acidification of the solution 20 to solution 21 is accomplished in the anode compartment of a two compartment cell 11 divided with a cation exchange membrane, while the sodium hydroxide is formed in the cathode compartment. The acidified solution 21 is fed to the anode compartment in a cell 1 as shown in Fig. 1 and operating as described above. The acidified product solution 22 is then recycled to the chlorine dioxide reactor 10, thus eliminating the need for feeding acids from external sources and avoiding the net production of sulphate by-product. The gaseous $ClO_2$ and $O_2$ withdrawn from the reactor 10 are transferred to an absorber 12 in which the $ClO_2$ is absorbed in water while the $O_2$ is transferred to the cell 1 and used in the production of $H_2O_2$ and NaOH. By varying the conversion degree for the acidification between the two cells 11 and 1, the production of sodium hydroxide and hydrogen peroxide can be controlled to fit the demand in each specific case.

The invention will now be described further through the following Example, which however not should be interpreted as limiting its scope. If not otherwise stated, all parts and percentages refer to part and percent by weight.

Example: Chloric acid and alkaline hydrogen peroxide were simultaneously produced in a two compartment laboratory cell provided with a Ti/DSA™ anode (240 cm$^2$), an oxygen reducing graphite felt cathode (240 cm$^2$ superficial, $10^4$ cm$^2$ real) and a Nafion™ 450 cation-exchange membrane. An aqueous solution of sodium chlorate and chloric acid was fed to the anode compartment, while an aqueous solution of sodium hydroxide and oxygen was fed to the cathode compartment. At the anolyte outlet the temperature was about 35-40°C and the pressure about 240-500 kPa. At the catholyte outlet the temperature was about 40-44°C and the pressure about 101-450 kPa. For practical reasons, the cell was operated with a single pass of catholyte, while the anolyte leaving the cell was recirculated and partly neutralised with sodium hydroxide before entering the anode compartment again. Samples of anolyte and catholyte were taken at the respective outlets and analysed, and the current efficiency (C.E.) for the hydrogen peroxide formation and the sodium transport over the membrane (corresponds to the sodium hydroxide formation). In the Table below, steady state figures for the different runs appear :

| Anolyte | | | Catholyte | | |
|---|---|---|---|---|---|
| [H$^+$] (M) | [ClO$_3$$^-$] (M) | C.E. Na$^+$ (%) | [H$_2$O$_2$] (M) | C.E. H$_2$O$_2$ (%) | OH / H$_2$O$_2$ Net. Prod. (mol/mol) |
| 0.98 | 5.65 | 57.5 | 0.58 | 74.2 | 1.55 |
| 0.53 | 6.04 | 68.2 | 0.58 | 71.3 | 1.91 |
| 0.98 | 5.93 | 59.3 | 0.64 | 74.0 | 1.60 |
| 0.50 | 5.17 | 64.8 | 0.56 | 68.8 | 1.90 |
| 0.74 | 5.51 | 62.3 | 0.63 | 80.4 | 1.55 |
| 0.74 | 4.66 | 56.2 | 0.63 | 78.9 | 1.42 |
| 0.53 | 4.54 | 65.0 | 0.64 | 81.1 | 1.60 |
| 1.02 | 4.56 | 50.1 | 0.61 | 78.0 | 1.28 |
| 0.76 | 5.46 | 61.2 | 0.67 | 81.9 | 1.49 |
| 0.48 | 5.01 | 68.2 | 0.66 | 80.6 | 1.70 |
| 0.51 | 5.03 | 66.1 | 0.70 | 84.8 | 1.56 |
| 1.00 | 4.98 | 55.1 | 0.65 | 78.7 | 1.40 |
| 0.52 | 4.97 | 68.7 | 0.61 | 92.6 | 1.52 |
| 0.50 | 4.95 | 66.3 | 0.79 | 82.4 | 1.61 |
| 1.01 | 5.12 | 52.9 | 0.63 | 67.2 | 1.59 |
| 0.51 | 4.59 | 65.1 | 0.62 | 77.5 | 1.68 |

## Claims

1. A continuous process for production of an alkaline hydrogen peroxide solution and an acidified alkali metal salt solution in an electrochemical cell including an anode compartment provided with an anode and a cathode compartment provided with an oxygen reducing cathode, the process comprising the steps of.

   (a) feeding an aqueous alkali metal salt solution containing chlorate to the anode compartment;
   (b) reacting at the anode said aqueous alkali metal salt solution to obtain H$^+$ and to form an acidified aqueous alkali metal salt solution in the anode compartment;
   (c) transferring H$^+$ and alkali metal ions from the anode compartment to the cathode compartment;
   (d) feeding oxygen or oxygen containing fluid and water to the cathode compartment;
   (e) reacting at the cathode said oxygen and water to form an alkaline aqueous solution containing hydrogen peroxide (H$_2$O$_2$) and alkali metal hydroxide (MOH) in the cathode compartment;
   (f) withdrawing acidified aqueous alkali metal salt solution formed in the anode compartment; and,
   (g) withdrawing alkaline aqueous hydrogen peroxide solution formed in the cathode compartment,

wherein the molar ratio MOH:$H_2O_2$ for the net production of alkali metal hydroxide and hydrogen peroxide in the cathode compartment in step (e) is maintained from about 0.1:1 to about 2:1.

2. A process as claimed in claim 1, wherein the molar ratio MOH:$H_2O_2$ for the net production of alkali metal hydroxide and hydrogen peroxide in the cathode compartment in step (e) is maintained from about 0.5:1 to about 1.7:1

3. A process as claimed in any one of the claims 1-2, wherein the alkali metal salt solution fed to the anode compartment in step (a) also contains alkali metal sulphate.

4. A process as claimed in any one of the claims 1-3, wherein the molar ratio MOH:$H_2O_2$ for the net production of alkali metal hydroxide and hydrogen peroxide in the cathode compartment in step (e) is controlled by setting the acidity of the alkali metal salt solution obtained in the anode compartment.

5. A process as claimed in claim 4, wherein the molar ratio MOH:$H_2O_2$ for the net production of alkali metal hydroxide and hydrogen peroxide in the cathode compartment in step (e) is controlled by setting the residence time in the anode compartment.

6. A process as claimed in any one of the claims 1-5, wherein the process is operated with a conversion degree of alkali metal ions to $H^+$ in the anode compartment from about 0.05 to about 90%.

7. A process as claimed in any one of the claims 1-6, wherein the process is operated at a current efficiency for the production of alkali metal hydroxide from about 3 to about 85%.

8. A process as claimed in any one of the claims 1-7, wherein the acidified alkali metal solution obtained in the anode compartment and withdrawn in step (f) is used as a feed for chlorine dioxide production.

9. A process as claimed in any one of the claims 1-8, wherein the anode compartment and the cathode compartment in the cell are separated by means of a cation-exchange membrane.

10. A continuous process for production of hydrogen peroxide and simultaneous production of chlorine dioxide by reduction of chlorate ions in an acidic reaction medium maintained in a reactor comprising the steps:

(i) producing an alkaline hydrogen peroxide solution and an acidified alkali metal salt solution by performing steps (a) through (g) according to any one of the claims 1-9;
(ii) feeding to the reaction medium in the reactor acidified aqueous alkali metal salt solution withdrawn from anode compartment in step (f) of step (i);
(iii) reducing chlorate ions in the reaction medium to yield chlorine dioxide; and,
(iv) withdrawing chlorine dioxide from the reactor.

11. A process as claimed in claim 10, wherein the reduction of chlorate ions in step (iii) is accomplished by means of a reducing agent.

12. A process as claimed in claim 11, wherein the reducing agent is hydrogen peroxide.

13. A continuous process for production of hydrogen peroxide and simultaneous production of chlorine dioxide by reduction of chlorate ions in an acidic reaction medium maintained in a reactor comprising the steps:

(i) producing an alkaline hydrogen peroxide solution and an acidified alkali metal salt solution by performing steps (a) through (g) according to any one of the claims 1-9;
(ii) feeding to the reaction medium in the reactor acidified aqueous alkali metal salt solution withdrawn from anode compartment in step (f) of step (i);
(iii) reducing chlorate ions in the reaction medium to yield chlorine dioxide;
(iv) withdrawing chlorine dioxide from the reactor;
(v) withdrawing depleted reaction medium from the reactor;
(vi) acidifying depleted reaction medium from step (v) in an electrochemical cell under simultaneous production of alkali metal hydroxide; and,
(vii) using acidified reaction medium from step (vi) as a feed in step (a) of step (i).

**Patentansprüche**

1. Kontinuierliches Verfahren zur Herstellung einer alkalischen Wasserstoffperoxidlösung und einer angesäuerten Alkalimetallsalzlösung in einer elektrochemischen Zelle, welche einen mit einer Anode ausgestatteten Anodenraum und einen mit einer Sauerstoffreduzierenden Kathode ausgestatteten Kathodenraum einschließt, wobei das Verfahren die Schritte umfasst:

(a) Einfüllen einer Chlorat-enthaltenden, wässrigen Alkalimetallsalzlösung in den Anodenraum;
(b) Umsetzen der wässrigen Alkalimetallsalzlösung an der Anode, um H$^+$ zu erhalten, und um eine angesäuerte, wässrige Alkalimetallsalzlösung im Anodenraum zu bilden;
(c) Überführen der H$^+$-Ionen und Alkalimetallionen vom Anodenraum in den Kathodenraum;
(d) Einfüllen von Sauerstoff oder einer Sauerstoff-enthaltenden Flüssigkeit und Wasser in den Kathodenraum;
(e) Umsetzen von Sauerstoff und Wasser an der Kathode, um im Kathodenraum eine alkalische, wässrige Lösung zu bilden, welche Wasserstoffperoxid ($H_2O_2$) und Alkalimetallhydroxid (MOH) enthält;
(f) Entfernen der im Anodenraum gebildeten, angesäuerten, wäßrigen Alkalimetallsalzlösung; und
(g) Entfernen der im Kathodenraum gebildeten, alkalischen, wässrigen Wasserstoffperoxidlösung,

wobei das molare Verhältnis MOH:$H_2O_2$ der Nettoproduktion von Alkalimetallhydroxid und Wasserstorfperoxid im Kathodenraum in Schritt (e) bei etwa 0,1:1 bis etwa 2:1 gehalten wird.

2. Verfahren gemäß Anspruch 1, wobei das molare Verhältnis MOH:$H_2O_2$ der Nettoproduktion von Alkalimetallhydroxid und Wasserstoffperoxid im Kathodenraum in Schritt (e) bei etwa 0,5:1 bis etwa 1,7:1 gehalten wird.

3. Verfahren gemäß einem der Ansprüche 1 bis 2, wobei die in Schritt (a) in den Anodenraum eingefüllte Alkalimetallsalzlösung auch ein Alkalimetallsulfat enthält.

4. Verfahren gemäß einem der Ansprüche 1 bis 3, wobei das molare Verhältnis MOH:$H_2O_2$ der Nettoproduktion von Alkalimetallhydroxid und Wasserstoffperoxid im Kathodenraum in Schritt (e) durch Einstellen der Acidität der im Anodenraum erhaltenen Alkalimetallsalzlösung gesteuert wird.

5. Verfahren gemäß Anspruch 4, wobei das molare Verhältnis MOH:$H_2O_2$ der Nettoproduktion von Alkalimetallhydroxid und Wasserstoffperoxid im Kathodenraum in Schritt (e) durch Einstellen der Verweilzeit im Anodenraum gesteuert wird.

6. Verfahren gemäß einem der Ansprüche 1 bis 5, wobei das Verfahren mit einem Umwandlungsgrad von Alkalimetallionen zu H$^+$-Ionen im Anodenraum von etwa 0,05 bis etwa 90% betrieben wird.

7. Verfahren gemäß einem der Ansprüche 1 bis 6, wobei das Verfahren bei einem Stromwirkungsgrad für die Herstellung von Alkalimetallhydroxid von etwa 3 bis etwa 85% betrieben wird.

8. Verfahren gemäß einem der Ansprüche 1 bis 7, wobei die im Anodenraum erhaltene und in Schritt (f) entfernte, angesäuerte Alkalimetallsalzlösung als Zuführung zur Chlordioxidherstellung verwendet wird.

9. Verfahren gemäß einem der Ansprüche 1 bis 8, wobei der Anodenraum und der Kathodenraum in der Zelle durch eine Kationenaustauschermembran getrennt sind.

10. Kontinuierliches Verfahren zur Herstellung von Wasserstoffperoxid und gleichzeitigen Herstellung von Chlordioxid durch Reduktion von Chlorationen in einem sauren Reaktionsmedium, welches in einem Reaktor aufrechterhalten wird, umfassend die Schritte:

(i) Herstellen einer alkalischen Wasserstoffperoxidlösung und einer angesäuerten Alkalimetallsalzlösung durch Ausführen der Schritte (a) bis (g) nach einem der Ansprüche 1 bis 9;
(ii) Zugeben der angesäuerten, wässrigen Alkalimetallsalzlösung, welche aus dem Anodenraum in Schritt (f) von Schritt (i) entfernt wurde, zum Reaktionsmedium im Reaktor;
(iii) Reduzieren der Chlorationen im Reaktionsmedium, um Chlordioxid zu erhalten; und
(iv) Entfernen des Chlordioxids aus dem Reaktor.

11. Verfahren gemäß Anspruch 10, wobei die Reduktion der Chlorationen in Schritt (iii) unter Verwendung eines Reduktionsmittels durchgeführt wird.

12. Verfahren gemäß Anspruch 11, wobei das Reduktionsmittel Wasserstoffperoxid ist.

13. Kontinuierliches Verfahren zur Herstellung von Wasserstoffperoxid und gleichzeitigen Herstellung von Chlordioxid durch Reduktion von Chlorationen in einem sauren Reaktionsmedium, welches in einem Reaktor aufrechterhalten wird, umfassend die Schritte:

(i) Herstellen einer alkalischen Wasserstoffperoxidlösung und einer angesäuerten Alkalimetallsalzlösung durch Ausführen der Schritte (a) bis (g) nach einem der Ansprüche 1 bis 9;
(ii) Zugeben der angesäuerten, wässrigen Alkalimetallsalzlösung, welche aus dem Anodenraum in Schritt (f) aus Schritt (i) entfernt wurde, zum Reaktionsmedium im Reaktor;
(iii) Reduzieren der Chlorationen im Reaktionsmedium, um Chlordioxid zu erhalten;
(iv) Entfernen des Chlordioxids aus dem Reaktor;
(v) Entfernen des verbrauchten Reaktionsmediums aus dem Reaktor;
(vi) Ansäuern des verbrauchten Reaktionsmediums aus Schritt (v) in einer elektrochemischen Zelle unter gleichzeitiger Herstellung von Alkalimetallhydroxid; und
(vii) Verwenden des angesäuerten Reaktionsmediums aus Schritt (vi) als Zuführung in Schritt (a) von Schritt (i).

**Revendications**

1. Procédé en continu pour la production d'une solution alcaline de peroxyde d'hydrogène et d'une solution acidifiée de sel de métal alcalin, dans une cellule électrochimique comprenant un compartiment anodique muni d'une anode et un compartiment cathodique muni d'une cathode où l'oxygène est réduit, ledit procédé comprenant les étapes consistant à :

(a) introduire dans le compartiment anodique une solution aqueuse de sel de métal alcalin contenant du chlorate,
(b) faire réagir à l'anode ladite solution aqueuse de sel de métal alcalin pour obtenir des ions $H^+$ et former une solution aqueuse acidifiée de sel de métal alcalin dans le compartiment anodique,
(c) faire passer des ions $H^+$ et des ions de métal alcalin du compartiment anodique au compartiment cathodique,
(d) introduire dans le compartiment cathodique de l'oxygène ou un fluide contenant de l'oxygène et de l'eau,
(e) faire réagir à la cathode ledit oxygène et l'eau pour former une solution aqueuse alcaline contenant du peroxyde d'hydrogène ($H_2O_2$) et un hydroxyde de métal alcalin (MOH), dans le compartiment cathodique,
(f) extraire la solution aqueuse acidifiée de sel de métal alcalin formée dans le compartiment anodique, et
(g) extraire la solution aqueuse alcaline de peroxyde d'hydrogène, formée dans le compartiment cathodique,

le rapport molaire MOH:$H_2O_2$ pour la production nette d'hydroxyde de métal alcalin et de peroxyde d'hydrogène dans le compartiment cathodique, dans l'étape (e), étant maintenu à une valeur d'environ 0,1:1 à environ 2:1.

2. Procédé selon la revendication 1, dans lequel le rapport molaire MOH:$H_2O_2$ pour la production nette d'hydroxyde de métal alcalin et de peroxyde d'hydrogène dans la compartiment cathodique, dans l'étape (e), est maintenu à une valeur d'environ 0,5:1 à environ 1,7:1.

3. Procédé selon la revendication 1 ou 2, dans lequel la solution de sel de métal alcalin introduite dans le compartiment anodique, dans l'étape (a), contient également un sulfate de métal alcalin.

4. Procédé selon l'une quelconque des revendications 1 à 3, dans lequel le rapport molaire MOH:$H_2O_2$ pour la production nette d'hydroxyde de métal alcalin et de peroxyde d'hydrogène dans le compartiment cathodique, dans l'étape (e), est réglé par réglage de l'acidité de la solution de sel de métal alcalin, obtenue dans le compartiment anodique.

5. Procédé selon la revendication 4, dans lequel le rapport molaire MOH:$H_2O_2$ pour la production nette d'hydroxyde de métal alcalin et de peroxyde d'hydrogène dans le compartiment cathodique, dans l'étape (e), est réglé par réglage du temps de séjour dans le compartiment anodique.

6. Procédé selon l'une quelconque des revendications 1 à 5, que l'on mène avec un degré de transformation des ions de métal alcalin en H⁺ dans le compartiment anodique d'environ 0,05 à environ 90 %.

7. Procédé selon l'une quelconque des revendications 1 à 6, que l'on mène avec un rendement en courant pour la production de l'hydroxyde de métal alcalin d'environ 3 à environ 85 %.

8. Procédé selon l'une quelconque des revendications 1 à 7, dans lequel la solution acidifiée de sel de métal alcalin, obtenue dans le compartiment anodique et extraite dans l'étape (f), est utilisée comme matière première pour la production de dioxyde de chlore.

9. Procédé selon l'une quelconque des revendications 1 à 8, dans lequel le compartiment anodique et le compartiment cathodique de la cellule sont séparés au moyen d'une membrane échangeuse de cations.

10. Procédé en continu pour la production de peroxyde d'hydrogène et la production simultanée de dioxyde de chlore par réduction des ions chlorates dans un milieu de réaction acide, maintenu dans un réacteur, procédé qui comprend les étapes consistant à :

    i) produire une solution alcaline de peroxyde d'hydrogène et une solution acidifiée de sel de métal alcalin en réalisant les étapes (a) à (g) selon l'une quelconque des revendications 1 à 9,
    ii) introduire dans le milieu de réaction présent dans le réacteur, la solution aqueuse acidifiée de sel de métal alcalin, extraite du compartiment anodique dans l'étape (f) de l'étape (i),
    iii) réduire les ions chlorates dans le milieu de réaction pour former du dioxyde de chlore, et
    iv) extraire le dioxyde de chlore du réacteur.

11. Procédé selon la revendication 10, dans lequel la réduction des ions chlorates dans l'étape (ii) est réalisée au moyen d'un agent réducteur.

12. Procédé selon la revendication 11, dans lequel l'agent réducteur est le peroxyde d'hydrogène.

13. Procédé en continu pour la production de peroxyde d'hydrogène et la production simultanée de dioxyde de chlore par réduction des ions chlorates dans un milieu de réaction acide, maintenu dans un réacteur, procédé qui comprend les étapes consistant à :

    (i) produire une solution alcaline de peroxyde d'hydrogène et une solution acidifiée de sel de métal alcalin en réalisant les étapes (a) à (g) selon l'une quelconque des revendications 1 à 9,
    (ii) introduire dans le milieu de réaction présent dans le réacteur, la solution aqueuse acidifiée de sel de métal alcalin, extraite du compartiment anodique dans l'étape (f) de l'étape (i),
    (iii) réduire les ions chlorates dans le milieu de réaction pour former du dioxyde de chlore,
    (iv) extraire le dioxyde de chlore du réacteur,
    (v) extraire le milieu de réaction épuisé du réacteur,
    (vi) acidifier le milieu de réaction épuisé, provenant de l'étape (v), dans une cellules électrochimique en produisant simultanément un hydroxyde de métal alcalin, et
    (vii) utiliser le milieu de réaction acidifié, provenant de l'étape (vi), comme matière première dans l'étape (a) de l'étape (i).

**Fig. 1**

**Fig. 2**